Europäisches Patentamt

European Patent Office

Office européen des brevets

(19)

(11) Veröffentlichungsnummer: **0 147 668**
**B1**

(12) # EUROPÄISCHE PATENTSCHRIFT

(45) Veröffentlichungstag der Patentschrift:
**05.08.87**

(51) Int. Cl.⁴: **C 08 G 18/38,** C 09 D 3/72,
D 06 N 3/14

(21) Anmeldenummer: **84114604.6**

(22) Anmeldetag: **01.12.84**

(54) **Hitzevernetzbare PUR-Beschichtungsmassen, Verfahren zu ihrer Herstellung und ihre Verwendung.**

(30) Priorität: **13.12.83 DE 3345071**

(43) Veröffentlichungstag der Anmeldung:
**10.07.85 Patentblatt 85/28**

(45) Bekanntmachung des Hinweises auf die Patenterteilung:
**05.08.87 Patentblatt 87/32**

(84) Benannte Vertragsstaaten:
**BE DE FR GB IT NL**

(56) Entgegenhaltungen:
**Keine Entgegenhaltungen**

(73) Patentinhaber: **BAYER AG, Konzernverwaltung RP Patentabteilung, D-5090 Leverkusen 1 Bayerwerk (DE)**

(72) Erfinder: **Potter, Terry A., Dr., 83E Benjamin Drive, New Martinsville WV 26155 (US)**
Erfinder: **Thoma, Wilhelm, Dr., Birkenweg 25, D-5090 Leverkusen 3 (DE)**
Erfinder: **Pedain, Josef, Dr., Haferkamp 6, D-5000 Köln 80 (DE)**

## Beschreibung

Die Erfindung betrifft bei relativ erniedrigten Temperaturen hitzevernetzende Polyurethan-(PUR)Kunststoffmassen für die Beschichtung vorzugsweise textiler Flächengebilde, insbesondere nach dem Umkehrverfahren. Die erfindungsgemässen Beschichtungsmassen bestehen im wesentlichen aus linearen Polyurethanen und Harnstoff- und/oder Melamin-Formaldehydharzen als latenten Vernetzern, wobei die linearen Polyurethane 2,2-Bis(hydroxymethyl)-propionsäureamid, vorzugsweise in Mengen von 0,5 bis 10 Gew.-%, zur Erleichterung der Vernetzungsreaktion eingebaut enthalten.

Die Erfindung betrifft ferner ein Verfahren zur Herstellung der hitzevernetzbaren Polyurethanbeschichtungsmassen, gekennzeichnet durch den Einbau von 2,2-Bis(hydroxymethyl)-propionsäureamid. Ferner wird die Verwendung der Polyurethanbeschichtungsmassen zur Beschichtung, insbesondere als leicht hitzevernetzbare Haftstriche im Umkehrverfahren beansprucht.

Es gehört seit längerer Zeit zum Stand der Technik, Textilien, wie Gewebe, Gewirke oder Vliese zum Zwecke der Herstellung von Kunstleder und ähnlichen Artikeln mit Lösungen von Polyurethanen nach dem Direkt- oder Umkehrverfahren zu beschichten. Die Beschichtungslösungen können entweder Urethanvorpolymere enthalten, die zur Erreichung ihrer endgültigen Kunststoffeigenschaften und Produktqualitäten mit polyfunktionellen Vernetzern umgesetzt werden (sogenannte Zweikomponenten-Polyurethane) oder hochpolymere Polyurethane, die ihre Kunststoffeigenschaften schon voll besitzen (sogenannte Einkomponenten-Polyurethane). Die so erhaltenen Beschichtungen werden zur Fabrikation von Oberbekleidung, Täschnerwaren, Schuhobermaterial, Zeltplanen, Markisen, Polsterwaren und vielen anderen Artikeln verwendet.

Aus der DE-OS 2 814 173 ist es bekannt, Urethangruppen enthaltende Vorpolymere, welche endständig 2 bis 8 OH- und/oder -$CONH_2$ und/oder Ketoxim-Urethangruppen aufweisen, zu einer vernetzbaren Mischung mit Harnstoff- oder Melamin-Formaldehyd zu kombinieren. Diese Produkte werden erst durch die Vernetzungsreaktion hochmolekular und haben vorher überhaupt keine mechanische Festigkeit. Es ist aber oft vorteilhaft und wünschenswert, dass Beschichtungsmassen auch vor der Passage durch einen Trockenkanal ein gewisses Niveau mechanischer Festigkeit haben.

Ferner ist aus der DE-OS 2 457 387 bekannt, dass spezielle Polyurethanprodukte aus aliphatischen oder cycloaliphatischen Polyisocyanaten und Hydrazin als Kettenverlängerer, die mit Formaldehyd-Harzen vernetzt werden, einen vorteilhaft weichen, nappalederartigen Griff haben. Diese Beschichtungsmassen sind aber nicht für alle Zwecke geeignet.

Der besondere Nachteil aller bekannten Polyurethane aus Dihydroxypolyethern und/oder -polyestern, Diisocyanaten und Diolen und/oder Polyolen als Kettenverlängerer, die mit Melamin- und/oder Harnstoff-Formaldehyd-Harzen gehärtet werden, ist die relativ hohe Aushärtungstemperatur (ca. 170°C) die man dafür benötigt.

Aufgabe der Erfindung war es, PUR-Beschichtungsmassen, vorzugsweise in Form von Lösungen, zur Verfügung zu stellen, die bei niederer Temperatur in kurzer Zeit mit Formaldehyd-Harzen aushärtbar sind.

Es wurde nun gefunden, dass bei relativ niederer Temperatur und relativ kurzer Vernetzungszeit mit Formaldehyd-Harzen ausreichend vernetzbare Beschichtungsmassen aufgebaut werden können, wenn man in die Polyurethane 2,2-Bis(hydroxymethyl)-propionsäureamid als alleiniges oder anteiliges Kettenverlängerungsmittel einbaut.

Gegenstand der Erfindung sind somit hitzevernetzbare Beschichtungsmassen, vorzugsweise in gelöster Form, bestehend aus einer Mischung von

A) im wesentlichen linearen Polyurethanpolymeren auf der Basis von höhermolekularen Diolen mit Molekulargewichten von 400-6000, Diisocyanaten und Kettenverlängerungsmitteln und

B) Melamin- und/oder Harnstoff-Formaldehydharzen, dadurch gekennzeichnet, dass man das Polyurethanpolymer A) als Kettenverlängerer 2,2-Bis(hydroxymethyl)-propionsäureamid, vorzugsweise in Mengen von 0,5 bis 10 Gew.-%, eingebaut enthält.

Besonders bevorzugt sind im wesentlichen lineare Polyurethane, die 0,75 bis 7,5 Gew.-% dieses Amids als Aufbaukomponente als alleiniges Kettenverlängerungsmittel oder in Abmischung mit weiteren Kettenverlängerungsmitteln, vorzugsweise niedermolekularen Diolen, enthalten.

Die erfindungsgemässen Polyurethane bestehen aus einem höhermolekularen Polyol oder Mischungen von höhermolekularen Polyolen mit durchschnittlich zwei Hydroxylgruppen und einem Molekulargewicht zwischen 400 und 6000, einem Diisocyanat oder Mischungen von Diisocyanaten und dem obengenannten Amid als Kettenverlängerer, gegebenenfalls weiteren Kettenverlängerern, vorzugsweise niedermolekularen Diolen, insbesondere Butandiol-1,4.

Gegenstand der Erfindung ist auch ein Verfahren zur Herstellung von hitzevernetzbaren Beschichtungsmassen, vorzugsweise in gelöster Form, aus einer Mischung von

A) im wesentlichen linearen Polyurethanpolymeren und

B) Harnstoff- und/oder Melamin-Formaldehydharzen,

dadurch gekennzeichnet, dass man die im wesentlichen linearen Polyurethanpolymeren A) auf der Basis von höhermolekularen Diolen mit Molekulargewichten von 400-6000, Diisocyanaten und Kettenverlängerungsmitteln unter Mitverwendung von 0,5 bis 10 Gew.-% 2,2-Bis(hydroxymethyl)-propionsäureamid als alleiniges Kettenverlängerungsmittel oder in Abmischung mit weiteren niedermolekularen Kettenverlängerungsmitteln, vorzugsweise Diolen,
gegebenenfalls in Gegenwart von Lösungsmitteln, herstellt und
mit den Harnstoff- und/oder Melamin-Formaldehydharzen B) und
gegebenenfalls an sich üblichen Hilfs- und Zusatzstoffen vermischt.

Gegenstand der Erfindung ist ferner die Verwendung der hitzevernetzbaren Beschichtungsmassen zur Beschichtung von textilen Flächengebilden, Leder oder Spaltleder nach dem Direkt- oder Umkehrbeschichtungsverfahren, vorzugsweise als Haftstrich bei Umkehrbeschichtungsverfahren, durch Auftrag der Beschichtungsmassen oder bevorzugt ihrer Lösungen, in Mengen zwischen 10 und 300 g/m², vorzugsweise 20 und 100 g/m², und anschliessendes Erhitzen auf 110 bis 160°C, vorzugsweise 120 bis 140°C, gegebenenfalls unter Entfernung der Lösungsmittel.

Das 2,2-Bis(hydroxymethyl)-propionsäureamid ist aus der DE-A 2 631 284 bzw. der DE-A 3 107 060 bekannt. In der DE-A 2 631 284 ist die Verwendung dieser Substanz als Haut-Feuchthaltemittel für kosmetische Mittel beschrieben. In der DE-OS 3 107 060 wird beschrieben, dass durch Verwendung dieser Verbindung die Trübung eines Kontroll- oder Eichserums verhindert wird. Eine frühere Verwendung dieses Amids in der Polyurethanchemie, insbesondere für leicht hitzevernetzbare PU-Beschichtungsmassen, ist nicht bekannt.

Das Amid lässt sich einfach herstellen, z.B. durch die Umsetzung von 2,2-Bis(hydroxymethyl)-propionsäuremethylester und Ammoniak. Der Schmelzpunkt der Substanz, die für die hier beschriebenen Versuche verwendet wurde, lag bei 174 bis 175°C und damit höher als in der DE-A 2 631 284 beschrieben, was auf ein reineres Präparat hindeutet.

Nach dem erfindungsgemässen Verfahren wird der Einsatz kostengünstiger, wenn auch etwas temperaturempfindlicherer Trennpapiere möglich; ausserdem reduzieren sich die Anlage- und Energiekosten bei der Vernetzungsstufe der Beschichtungen. Ferner sind niedere effektive Vernetzungstemperaturen bei Lederbeschichtungen unabdingbar, da andernfalls eine Verhärtung des Leders bei zu hoher Temperatur erfolgt.

Als Ausgangsstoffe für die nach dem beschriebenen Verfahren herstellbaren Polyurethan(lösungen) werden die üblichen Polyisocyanate, Polyhydroxylverbindungen und Kettenverlängerungsmittel, Hilfs- und Zustatzstoffe verwendet. Es werden organische Lösungsmittel, die in der Polyurethanchemie üblich sind, eingesetzt. z.B. Dimethylformamid, Dimethylacetamid, Alkylester niedriger Carbonsäuren wie Ethylacetat oder Butylacetat, aromatische Kohlenwasserstoffe wie Benzol oder Chlorbenzol, Ether oder Etherverbindungen wie Tetrahydrofuran, Dioxan, Methylglykolacetat und ähnliche Lösungsmittel, sowie gegebenenfalls Mischungen dieser Lösungsmittel.

Als Polyurethane sind für das erfindungsgemässe Verfahren die üblichen bekannten Verbindungen geeignet. Als Ausgangskomponente werden aliphatische, cycloaliphatische, araliphatische aromatische und heterocyclische Polyisocyanate mit einer NCO-Funktionalität von vorzugsweise 2, wie sie z.B. bei W. Siefken, Liebigs Ann. Chem. 562, 75 (1948) beschrieben werden, eingesetzt. Die Isocyanate enthalten einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, wobei die aromatischen oder cycloaliphatischen Ringe noch mit Alkylgruppen, vorzugsweise mit bis zu 4 Alkylgruppen mit je 1 bis 4 C-Atomen substituiert sein können, oder einen araliphatischen Kohlenwasserstoffrest mit 8 bis 15, vorzugsweise 8 bis 13 C-Atomen wie z.B. 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat, 1-Isocyanato-3,3,5-trimethyl-5-isocyanatomethyl-cyclohexan, 2,4- und 2,6-Hexahydrotoluylen-diisocyanat, 3,3',5,5'-Tetraethyl-dicyclohexylmethan-4,4'-diisocyanat, 3,3'-Dimethyl-dicyclohexylmethan-4,4'-diisocyanat, Perhydro-2,4'- und -4,4'-diphenylmethan-diisocyanat, 1,3- und 1,4-Phenylendiisocyanat, 2,4- und/oder 2,6-Toluylendiisocyanat, Diphenylmethan-2,4'- und/oder -4-4'- und/oder 2,2'-diisocyanat, Naphthylen-1,5-diisocyanat, sowie bei isomeren Verbindungen beliebige Gemische dieser Isomeren (oder ihrer Konformeren im Falle von cycloaliphatischen Verbindungen).

Bevorzugte Polyisocyanate sind die technisch leicht zugänglichen Diisocyanate wie z.B. p-Phenylendiisocyanat, Diphenylmethandiisocyanate, Toluylendiisocyanate, Naphthalin-1,5-diisocyanat, Isophorondiisocyanat, Hexamethylendiisocyanat und Trimethylhexamethylendiisocyanat, gegebenenfalls als Mischung ihrer Isomeren oder Konformeren oder als Mischung verschiedener Diisocyanate.

Als höhermolekulare Polyhydroxyverbindungen eignen sich Polyester, Polyesteramide, Polyether, Polyacetale und Polycarbonate, wie sie üblicherweise bei der Polyurethanherstellung verwendet werden. Vorzugsweise werden Verbindungen mit zwei Hydroxylgruppen pro Molekül eingesetzt, mit einem mittleren Molekulargewicht von 400-6000, vorzugsweise 800-3000.

Die für das erfindungsgemässe Verfahren geeigneten Hydroxylgruppen enthaltenden Polyester sind Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren.

Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und heterocyclischer Natur sein. Verwendbare Polyester werden beispielsweise auch in Houben-Weyl-Müller, XIV/2, S. 12-29, Thieme, Stuttgart 1963 beschrieben.

Als Beispiele für solche Carbonsäuren und deren Derivate seien genannt: Oxalsäure, Malonsäure, Bernsteinsäure, Glutarsäure, Adipinsäure, Pimelinsäure, Korksäure, Azelainsäure, Sebacinsäure, Maleinsäure, Fumarsäure, Phthalsäure, Isophthalsäure, Terephthalsäure, Diethylbernsteinsäure, und 1,4-Cyclohexandicarbonsäure.

Als Alkoholkomponente können beispielsweise Ethylenglycol, Diethylenglycol, Triethylenglycol, 1,2- und 1,3-Propandiol, 1,4- und 2,3-Butandiol, 1,5-Pentandiol, 1,6-Hexandiol, 1,8-Octandiol, Neopentylglykol, 1,4-Bis(hydroxymethyl)-cyclohexan und 2-Methy-1,3-propandiol verwendet werden. In untergeordnetem Masse (≤ etwa 5 Mol-%) lassen sich auch höherfunktionelle Polyole wie beispielsweise Glycerin, Trimethylolpropan, 1,2,6-Hexantriol, 1,2,4-Butantriol, Pentaerythrit oder Sorbit verwenden. Es sind auch Polyester mit anteiligen Doppel- oder Dreifachbindungen aus ungesättigten Fettsäuren einsetzbar, ebenso Polyester aus Lactonen wie z.B. ε-Caprolacton oder aus Hydroxycarbonsäure wie z.B. ω-Hydroxycapronsäure.

Als höhermolekulare Polyhydroxyverbindungen können erfindungsgemäss auch lineare, vorzugsweise zwei Hydroxylgruppen aufweisende Polyether dienen, z.B. Additionsprodukte aus Alkylenoxiden an Startverbindungen. Als Alkylenoxide eignen sich beispielsweise Ethylenoxid, Propylenoxid, Butylenoxid, Tetrahydrofuran, Styroloxid und Epihalogenhydrine, die auch in Form ihrer Gemische oder sequentiell eingesetzt werden können (z.B. Propylenoxid und anschliessend zur Endgruppensequenz-Bildung mit Ethylenoxid).

Als Starterkomponenten werden Verbindungen mit beweglichen H-Atomen eingesetzt wie Wasser, Di- und/oder Polyole, z.B. Ethylenglykol, 1,2- und 1,3-Propandiol, 2,2-Bis(4-hydroxyphenyl)-propan und deren Gemische oder Di- und/oder Polyamine, z.B. Ethylendiamin, Isophorondiamin.

Als höhermolekulare Polyhydroxylverbindungen sind ebenfalls Polyacetale einsetzbar, die z.B. durch Kondensation von Formaldehyd oder eines anderen Aldehyds mit mehrwertigen Alkoholen der beschriebenen Art entstehen. Ebenso verwendbar sind auch Polycarbonate der an sich bekannten Art, die z.B. aus Diolen mit z.B. Diphenylcarbonat oder Phosgen hergestellt werden können.

Neben dem 2,2-Bis(hydroxymethyl)-propionsäureamid und den beschriebenen höhermolekularen Polyhydroxylverbindungen können gegebenenfalls niedermolekulare Kettenverlängerungsmittel mit beweglichen Wasserstoffatomen mitverwendet werden, die mindestens bifunktionell mit Isocyanaten reagieren und Molekulargewichte von 32 bis 399 aufweisen. Vorzugsweise sind für diesen Zweck niedermolekulare Diole, Aminoalkohole und/oder Diamine, Hydrazine oder Hydrazid-Verbindungen geeignet.

Erfindungsgemäss geeignete Kettenverlängerungsmittel sind Diole mit Molekulargewichten von 62 bis 399, vorzugsweise 62 bis 254, z.B. Ethylenglykol, 1,2- und 1,3-Propanodiol, 1,4-, 1,3- und 2,3-Butandiol, 1,5-Pentandiol, 1,6-Hexandiol, 1,8-Octandiol, Neopentylglykol, 1,4-Bis(hydroxymethyl)-cyclohexan, 2-Methyl-1,3-propandiol, Diethylenglykol, Triethylenglykol, Tetraethylenglykol, Dipropylenglykol, 4,4'-Dihydroxydiphenylpropan, Ethanolamin, Diethanolamin, N-Methyldiethanolamin, 3-Aminopropanol. Ebenso eignen sich Ethylendiamin, 1,4-Tetramethylendiamin, 1,11-Undecamethylendiamin, 1,12-Dodecamethylendiamin, 1-Amino-3-aminomethyl-3,5,5-trimethylcyclohexan, 1,4-Diaminocyclohexan, 2,4- und 2,6-Hexahydrotoluylendiamin, 2,4'- und 4,4'-Diaminodicyclohexylmethan, 1-Amino-2-aminomethyl-3,3,5(3,5,5)-trimethylcyclopentan, Toluylendiamin, p-Xylylendiamin, 4,4'-Diaminodiphenylmethan, Hydrazin, Methylhydrazin, N,N'-Dimethylhydrazin und deren Homologe, wobei diese Kettenverlängerer auf Amin- bzw. Hydrazin-Basis, vorzugsweise in untergeordneten Mengen neben dem 2,2-Bis(hydroxymethyl)-propionsäureamid und Diolen eingesetzt werden (vorzugsweise weniger als 30 Mol-% der gesamten Kettenverlängerungsmittel).

Bevorzugt wird für Beschichtungs-Haftstrichmassen das 2,2-Bis(hydroxymethyl)-propionsäureamid als alleiniges Kettenverlängerungsmittel oder in Mischung mit niedermolekularen Diolen eingesetzt.

Die Polyurethanlösungen mit Konzentrationen von vorzugsweise 20 bis 80 Gew.-%, insbesondere 30 bis 70 Gew.-%, werden nach dem erfindungsgemässen Verfahren so hergestellt, dass man zur Lösung der höhermolekularen Polyole und niedermolekularen Kettenverlängerungsmittel (gegebenenfalls in einem Teil des Lösungsmittels) die Polyisocyanate zugibt. Mit fortschreitender Umsetzung und steigender Viskosität kann gegebenenfalls portionsweise bis zur erforderlichen Endkonzentration nachverdünnt werden. Die Reaktionstemperaturen liegen im allgemeinen bei 30 bis 130°C, vorzugsweise bei 50 bis 100°C. Die Erhöhung der Kettenlänge der Polyurethane und Steigerung der Viskosität kann gegebenenfalls durch nachträgliche Zugabe geringer Mengen des Polyisocyanats erreicht werden.

Alternativ dazu kann man in einer Zweistufenreaktion zunächst die höhermolekularen Polyole mit den Diisocyanaten (gegebenenfalls in einem Teil des Lösungsmittels) umsetzen. Nachfolgend wird mit den genannten niedermolekularen Kettenverlängerungsmitteln die Polymerkette verlängert und die Viskosität erhöht; man verdünnt gegebenenfalls wie beschrieben auf die erforderliche Endkonzentration.

Die Herstellung der PUR-Beschichtungsmassen kann auch in den an sich bekannten Abwandlungen der Verfahren erfolgen, z.B. unter Mitverwendung von geringen, modifizierenden Mengen an Kettenabbrechern oder höherfunktionellen Verbindungen.

Wie früher erwähnt, werden die Polyisocyanate einerseits und das 2,2-Bis(hydroxymethyl)-propionsäureamid als auch alle höhermolekularen Polyole und Kettenverlängerer andererseits mit einem NCO/OH-Verhältnis zwischen 0,8 : 1 und 1,2 : 1, vorzugsweise zwischen 0,95 : 1 und 1,05 : 1 eingesetzt.

Um stabile Lösungen herzustellen, können Oxime gemäss DE-A 3 142 706 als Kettenabbruchsmittel eingesetzt werden. Hierzu werden beispielsweise niedermolekulare, aliphatische, cycloaliphatische oder araliphatische Monooxime mit Molekulargewichten von 73 bis 325, vorzugsweise 73 bis 141 verwendet, wie z.B. Acetonoxim, Butanonoxim, 3-Methylbutanonoxim, 3,3-Dimethylbutanonoxim, 2- und 3-Pentanonoxim, 4-Methyl-2-pentanonoxim, Cyclophentanonoxim, 2,2,4(2,4,4)-Trimethylcyclopentanonoxim, Cyclohexanonoxim oder Acetophenonoxim; bevorzugt wird Butanonoxim eingesetzt.

Es erweist sich als günstig, wenn beim Erreichen der gewünschten Viskosität der Polyurethanlösung weniger als 0,4 Gew.-%, vorzugsweise weniger als 0,25 Gew.-%, besonders bevorzugt weniger als 0,15 Gew.-% NCO, d.h. nicht umgesetzter NCO-Gruppen vorhanden sind. Zum Kettenabbruch der Polyadditionsreaktion wird eine dazu mindestens äquivalente Menge Oxim benötigt, in der Regel wird jedoch überschüssiges Monooxim zugesetzt. Die für den Kettenabbruch verwendeten Mengen liegen im allgemeinen zwischen 0,05 und 2 Gew.-% Oxim, bezogen auf Feststoff, vorzugsweise im Bereich von 0,08 bis 1 Gew.-%. Überschüssiges Reagenz stört nicht und verhält sich wie ein Lösungsmittel.

Den Beschichtungsmassen können übliche Hilfs- und Zusatzstoffe zugesetzt werden, z.B. Pigmente, Farbstoffe, Füllstoffe, Antioxidantien, Lichtschutzmittel, UV-Absorber, Griffmittel, Trennmittel und Weichmacher.

Zur Vernetzung der erfindungsgemässen Beschichtungsmassen dienen 2 bis 20 Gew.-%, bevorzugt 5 bis 15 Gew.-% an Harnstoff- und/oder Melamin-Formaldehydharzen, wobei übliche Katalysatoren zugemischt werden können. Vernetzer dieser Art sind in der Beschichtungsindustrie an sich bekannt und werden z.B. auch in den DE-A 2 457 387 (US-PS 4 035 213) und 1 719 324, sowie insbesondere in der US-PS 3 242 230 beschrieben.

Als Katalysatoren für die Vernetzung der Formaldehydharze können in an sich bekanntner Weise kleine Mengen (bis zu ca. 10 Gew.-%, vorzugsweise 1 bis 5 Gew.-%, bezogen auf Formaldehydharz) an Säuren wie z.B. Phosphorsäure, saure Salze der Phosphorsäure, Maleinsäure oder p-Toluolsulfonsäure zugesetzt werden. Sowohl Formaldehydharz als auch Katalysator werden vorzugsweise ohne organisches Lösungsmittel (also rein oder in wässriger Lösung) eingesetzt, können aber auch in DMF oder Alkoholen, wie z.B. i-Propanol oder Butanolen gelöst werden.

Neben den Formaldehyd-Derivaten können als Vernetzer auch polyfunktionelle, gegebenenfalls verkappte Polyisocyanate (vorzugsweise in Mengen bis 50% der Gesamtvernetzermenge) mitverwendet werden, wodurch in manchen Fällen besonders günstige Eigenschaften der Beschichtungen erzielt werden.

Wie schon erwähnt, sind die erfindungsgemässen Beschichtungsmassen insbesondere zur Beschichtung von textilen Flächengebilden, Leder oder Spaltleder geeignet. Die Auftragmenge kann dabei in weiten Grenzen schwanken; sie liegt im allgemeinen zwischen 10 und 300 g/m², vorzugsweise zwischen 20 und 100 g/m². Die Beschichtungsmassen können sowohl nach dem Direkt- als auch bevorzugt nach dem Umkehrbeschichtungsverfahren appliziert werden.

Selbstverständlich ist es dabei gegebenenfalls möglich, neben den erfindungsgemässen Beschichtungsmassen auf das Substrat auch konventinelle Beschichtungslösungen oder -pasten als weitere Schicht aufzubringen. Solche konventionellen Rezepturen werden z.B. in der DE-A 2 457 387 (US-PS 4 035 213) als Deck- und Haftstriche eingehend beschrieben.

Bevorzugt werden die erfindungsgemässen Beschichtungsmassen als Haftstrich bei der Umkehrbeschichtung von Textilien, Leder oder Spaltleder eingesetzt. Man trägt dabei zunächst auf einen geeigneten Zwischenträger (z.B. ein Stahlband, ein Trennpapier, eine Silikonmatrize und dergleichen) den Deckstrich (vorzugsweise eine erfindungsgemässe Lösung oder Paste oder auch eine konventionelle Rezeptur) in einer Dicke von ca. 20 bis 80 g/m² auf, trocknet in einem Trockenkanal, bringt auf den getrockneten Deckstrich den Haftstrich in einer Dicke von 30 bis 100 g/m² auf, kaschiert das Substrat zu, heizt die Beschichtung in einem weiteren Trockenkanal bei ca. 110 bis 160°C, vorzugsweise 120 bis 140°C, aus und zieht das beschichtete Substrat vom Trennträger ab.

Wie schon erwähnt, können aber die erfindungsgemässen Beschichtungsmassen ausser im sogenannten Transferverfahren auch im Direktstreichverfahren unmittelbar auf das textile Substrat aufgebracht werden.

Zum Aufbringen der Beschichtungsmassen in Form ihrer Lösungen im Transfer- oder im Direktstreichverfahren bedient man sich der bekannten Techniken des Walzenrakels, Gummituchrakels, Reverse Roll-Coaters und anderer. Darüber hinaus lassen sich mit besonderem Vorteil für hochprozentige Streichmassen die modernen Techniken des Siebdrucks und des Gravurwalzendrucks einsetzen.

Die erfindungsgemässen Beschichtungsmassen aus Urethanpolymeren und Harnstoff- und/oder Melaminformaldehydharzen als Vernetzer können verschiedene an sich bekannte Hilfs- und Zusatzmittel in üblichen Mengen enthalten; z.B. Pulverpigmente, formierte Pigmente, andere farbgebende Mittel- UV-Stabilisatoren, Antioxidantien, Vernetzungskatalysatoren, griffbeeinflussende Mittel wie Silicone, Celluloseester, Füllstoffe wie Kreide, Kaolin oder Schwerspat, oberflächenaktive Kieselgele und andere. Diese Hilfs- und Zusatzmittel können an geeigneter Stelle den Ausgangsstoffen, dem Polyurethan, dem Vernetzer oder den erfindungsgemässen Mischungen zugegeben werden.

### Beispiele

#### Herstellung einer Deckstrichlösung (nicht anspruchsgemäss) D 1

2000 g Butanol-1,4/Adipinsäurepolyester (1,0 Mol) werden in 8555 g DMF bei 90°C mit 1380 g 4,4'-Diphenylmethandiisocyanat (5,5 Mol) und 278 g Ethylenglykol (4,5 Mol) bis zur vollständigen NCO-Freiheit umgesetzt. Die 30%ige PUR-Lösung in DMF hat eine Viskosität von 35 000 mPas/25°C.

Zur Pigmentierung dienen 10 Gew.-% einer 40%igen Anpastung von Titandioxid in obiger PUR-Lösung (DMF = Dimethylformamid).

#### Herstellung der Haftstrichlösung H 1 (anspruchsgemäss)

Zur Herstellung der 70%igen Polyurethanlösung werden 1000 g (0,5 Mol) eines Polyesters aus Adipinsäure/1,6-Hexandiol/Neopentylglykol (Molverhältnis der Glykole 65 : 35) mit der OH-Zahl 56, 500 g (0,25 Mol) eines linearen Polypropylenglykols mit der OH-Zahl 56, 15 g (0,11 Mol) 2,2-Bis(hydroxymethyl)-propionsäureamid und 10 g (0,11 Mol) 1,4-Butandiol in 365 g Dimethylformamid gelöst. Die Lösung wird mit 168 g (0,97 Mol) einer 80/20 Mischung 2,4/2,6-Diisocyanatotoluol bei 80°C umgesetzt. Während der Reaktion wird die Lösung allmählich mit 360 g Dimethylformamid verdünnt. Nach Erreichen der Viskosität (bei ca. 80°C) von etwa 14 000 mPas wird 1 g (0,012 Mol) Butanonoxim zugegeben und es wird ca. 1 h bei 80°C nachgerührt. Die Viskosität der Lösung beträgt 42 000 mPas/23°C.

### Herstellung der Haftstrichlösung H 2
#### (anspruchsgemäss)

Zur Herstellung der 70%igen Lösung werden 1000 g (0,5 Mol) eines Polyesters aus 1,6-Hexandiol, Neopentylglykol und Adipinsäure mit der OH-Zahl 56 (siehe H/1), 500 g (0,25 Mol) eines linearen Polypropylenglykols mit der OH-Zahl 56 und 31 g (0,23 Mol) 2,2-Bis(hydroxymethyl)-propionsäureamid in 370 g Dimethylformamid gelöst. Die Lösung wird mit 167 g (0,96 Mol) einer 80/20 Mischung 2,4/2,6-Diisocyanatotoluol bei 80°C umgesetzt. Während der Reaktion wird die Mischung allmählich mit 360 g Dimethylformamid verdünnt. Man rührt die Mischung bis eine Viskosität von etwa 16 000 mPas (bei 80°C) erreicht ist. Das Produkt wird mit 1,0 g (0,012 Mol) Butanonoxim umgesetzt und ca. 1 h bei 80°C nachgerührt. Die Viskosität der Lösung beträgt 50 000 mPas/23°C.

### Herstellung der Haftstrichlösung H 3
#### (anspruchsgemäss)

Zur Herstellung der 70%igen Polyurethanlösung werden 1000 g (0,5 Mol) eines Polyesters aus 1,6-Hexandiol, Neopentylglykol und Adipinsäure mit der OH-Zahl 56, 1000 g (0,5 Mol) eines Polyesters aus Adipinsäure und 1,4-Butandiol/Ethylenglykol (Molverhältnis der Diole 1 : 1) mit der OH-Zahl 56 und 44 g (0,33 Mol) 2,2-Bis(hydroxymethyl)-propionsäureamid in 490 g Dimethylformamid gelöst. Die Lösung wird mit 220 g (1,26 Mol) einer 80/20 Mischung von 2,4/2,6-Diisocyanatotoluol bei 80°C umgesetzt. Während der Reaktion wird die Mischung allmählich mit 490 g Dimethylformamid verdünnt. Nach Erreichen einer Viskosität (bei 80°C) von etwa 11 000 mPas werden 2,0 g (0,023 Mol) Butanonoxim zugeben und es wird ca. 1 h bei 80°C nachgerührt. Die Endviskosität dieser Lösung beträgt 39 000 mPas/23°C.

### Herstellung der Haftstrichlösung H 4
#### (anspruchsgemäss)

Zur Herstellung der 65%igen Polyurethanlösung werden 2550 g (1,0 Mol) eines Polyesters aus Diethylenglykol und Adipinsäure mit der OH-Zahl 44 mit 333 g (1,5 Mol) 3,3,5-Trimethyl-5-isocyanatomethylcylohexylisocyanat und 84 g (0,5 Mol) 1,6-Hexandiisocyanat bei 100°C in der Schmelze zu einem NCO-Prepolymeren umgesetzt.

Die Schmelze wird in 500 g Toluol und 500 g Dimethylformamid gelöst und mit 126 g (0,95 Mol) 2,2-Bis(hydroxymethyl)-propionsäureamid bei 80°C umgesetzt. Nach Erreichen der Viskosität (bei 80°C) von etwa 20 000 mPas wird das Produkt mit 4,5 g (0,052 Mol) Butanonoxim umgesetzt und mit 500 g Isopropanol verdünnt. Die Endviskosität der Lösung beträgt 30 000 mPas/25°C.

### Herstellung von 70%igen Haftstrichlösungen ohne Dimethylolpropionsäureamid
#### (für Vergleichsversuche)

#### HV 1 (für Vergleich)

Zur Herstellung der 70%igen Lösung werden 1000 g (0,5 Mol) eines Polyesters aus 1,6-Hexandiol, Neopentylglykol und Adipinsäure mit der OH-Zahl 56 (siehe H/1), 500 g (0,25 Mol) eines linearen Polypropylenglykols mit der OH-Zahl 56 und 20,7 g (0,23 Mol) 1,4-Butandiol mit 162 g (0,93 Mol) einer 80/20 Mischung 2,4/2,6-Diisocyanatotoluol bei 80°C umgesetzt. Während der Reaktion wird die Mischung allmählich mit 720 g Dimethylformamid verdünnt. Nach Erreichen der Viskosität (bei 80°C) von etwa 12 000 mPas wird 1 g (0,012 Mol) Butanonoxim zugegeben und es wird ca. 1 h bei 80°C nachgerührt. Die Endviskosität der Lösung beträgt 40 000 mPas/23°C.

#### HV 2 (für Vergleich

1333 g (0,67 Mol) des vorstehend beschriebenen Mischpolyesters im Gemisch mit 667 g (0,33 Mol) eines Polypropylenglykolethers werden in analoger Weise mit 277 g (1,60 Mol) 2,4/2,6-Toluylendiisocyanat und 54,0 g (0,60 Mol) Butandiol-1,4 in 1000 g DMF zu einer 70%igen PUR-Lösung umgesetzt; Viskosität 40 000 mPas/25°C.

#### HV 3 (für Vergleich)

Zur Herstellung der 70%igen Polyurethan-Lösung werden 1000 g (0,5 Mol) eines Polyesters aus 1,6-Hexandiol, Neopentylglykol und Adipinsäure mit der OH-Zahl 56 (siehe H/1), 1000 g (0,5 Mol) eines Polyesters aus 1,4-Butandiol, Ethylenglykol und Adipinsäure mit der OH-Zahl 56 (siehe H 3) und 29,7 g (0,33 Mol) 1,4-Butandiol mit 220 g (1,26 Mol) einer 80/20 Mischung von 2,4/2,6-Diisocyanatotoluol bei 80°C umgesetzt. Während der Reaktion wird die Mischung allmählich mit 965 g Dimethylformamid verdünnt. Nach Erreichen einer Viskosität von etwa 12 000 mPas (bei 80°C) werden 2,0 g (0,023 Mol) Butanonoxim zugegeben und es wird ca. 1 h bei 80°C nachgerührt. Die Viskosität dieser Lösung beträgt 35 000 mPas/23°C.

### Zubereitung der Haftstrichpasten

Zu 1000 g der Haftstrichlösungen H 1 - H 4 (erfindungsgemäss) und HV 1 - HV 3 (Vergleich) werden jeweils 70-100 g eines ca. 50%igen handelsüblichen Formaldehyd-Melaminharzes (Melaminhexamethylolether) als Vernetzer und 20-30 g einer 20%igen Lösung von p-Toluolsulfonsäure in DMF (oder Isopropanol) als Katalysator gegeben.

### Allgemeine Arbeitsweise bei der Beschichtung

Auf einer Beschichtungsmaschine wird mittels Walzenrakel auf ein Trennpapier die Deckstrichlösung D) aufgerakelt; die Auftragsmenge beträgt 100 bis 150 g/m$^2$ Lösung. Nach der Passage durch den Trockenkanal, der am Eingang eine Lufttemperatur von 100°C und am Ausgang von 140°C aufweist, wird in der zweiten Streichanlage die Haftstrichlösung H) bzw. HV) (Vergleichsversuche), in analoger Weise in einer Auftragsmenge von 50 bis 150 g/m² aufgerakelt, die Textilbahn, z.B. eine geraute Baumwoll-Polyester-Ware 180 g/m²-Gewicht, kaschiert und im Trockenkanal das Lösemittel des Haftstriches verdunstet und die Vernetzung bei erhöhter Temperatur herbeigeführt (z.B. 130/140 bis 150/160°C). Beim Verlassen des Trockenkanals wird das Trennpapier und die beschichtete Gewebebahn unabhängig voneinander aufgewickelt.

Die Qualität der Beschichtungen wird durch die Untersuchung der Hydrolysealterung und Haftung auf dem BW/PES-Gewebe beurteilt. Die Ergebnisse sind in der folgenden Tabelle zusammengefasst. Es zeigt sich, dass die erfindungsgemässe Kombination (Deckstrich D + Haftung H 1 - 4) den Produkten vom Stand der Technik (Deckstrich D + Haftstrich HV 1 bis 3) deutlich überlegen sind.

Die Hydrolysealterung (7 Tage- bzw. 14 Tage-Lagerung bei 70°C und 95% r.F.) hat bei den erfindungsgemässen Kombinationen keinen negativen Einfluss, die Haftung auf dem Gewebe ist gut.

In den Vergleichsversuchen zeigt sich, dass die Vernetzung des Haftstrichs bei der geforderten niedrigen Einbrenntemperatur von 130 bis 140°C nicht ausreicht.

Während der Hydrolysealterung wird die Beschichtung der Vergleichsversuche abgebaut.

Wählt man eine höhere Härtungstemperatur bzw. eine grössere Katalysatormenge, tritt eine Verbesserung ein. Doch auch dann ist die Beschichtung dem erfindungsgemässen Aufbau unterlegen.

| Haftstrich-Nummer | Konzentration (%) der Lösung der Beschichttungsmasse | Kettenverlängerer pro Mol höhermolekulare Hydroxylverbindung (B = Butandiol-1,4; DMPSA = Dimethylolpropionsäureamid) | Harz-Vernetzer/Katalysator (%) | Vernetzungstemperatur (°C) | Chem. Beständigkeit a) Original b) n. 7 dl Hydrolyseal. c) n. 14 d Hydrolyseal. | | | Haftung auf BW/PES-Gewebe, gerauht, 180 g/m² |
|---|---|---|---|---|---|---|---|---|
| | | | | | a) | b) | c) | |
| H 1) | 70 | 0,15 B; 0,15 DMPSA | 10/2 | 130/140 | + | + | + | + |
| H 2) erfindungs- | 70 | 0,30 DMPSA | 10/2 | 130/140 | + | + | + | + |
| H 3) gemäss | 70 | 0,33 DMPSA | 10/2 | 130/140 | + | + | + | + |
| H 4) | 65 | 0,95 DMPSA | 7/2 | 130/140 | + | + | + | + |
| HV 1) | 70 | 0,3 B | 10/2 | 130/140 | + | – | – | – |
| HV 1) | | 0,3 B | 10/3 | 130/140 | + | + | – | 0 |
| HV 1) Vergleiche | | 0,3 B | 10/2 | 150/160 | + | + | – | 0 |
| HV 2) | 70 | 0,6 B | 10/2 | 130/140 | + | – | – | – |
| HV 3) | 70 | 0,33 B | 10/2 | 130/140 | + | – | – | – |

+ =   in Ordnung, kein negativer Befund
0 =   gerade noch ausreichend
– =   unzureichend, nicht brauchbar
BW/PES = Baumwoll/Polyester-Mischgewebe

## Patentansprüche

1. Hitzevernetzbare Beschichtungsmassen vorzugsweise in gelöster Form, bestehend aus einer Mischung von
A) im wesentlichen linearen Polyurethanpolymeren auf der Basis von höhermolekularen Diolen mit Molekulargewichten von 400-6000, Diisocyanaten und Kettenverlängerungsmitteln, und
B) Melamin- und/oder Harnstoff-Formaldehydharzen,
dadurch gekennzeichnet, dass
das Polyurethanpolymer A) als Kettenverlängerer-Diolkomponente das 2,2-Bis(hydroxymethyl)-propionsäureamid, vorzugsweise in Mengen von 0,5 bis 10 Gew.-%, eingebaut enthält.

2. Beschichtungsmassen nach Anspruch 1, dadurch gekennzeichnet, dass sie 0,75 bis 7,5 Gew.-% 2,2-Bis(hydroxymethyl)-propionsäureamid eingebaut enthalten.

3. Beschichtungsmassen nach Ansprüchen 1 und 2, dadurch gekennzeichnet, dass sie neben 2,2-Bis-(hydroxymethyl)-propionsäureamid als weitere Kettenverlängerungsmittel niedermolekulare Diole mit Molekulargewichten von 62 bis 399 eingebaut enthalten.

4. Beschichtungsmassen nach Ansprüchen 1 bis 3, dadurch gekennzeichnet, dass sie übliche Hilfs- und Zusatzstoffe enthalten.

5. Beschichtungsmassen nach Ansprüchen 1 bis 4, dadurch gekennzeichnet, dass die Beschichtungsmassen 2 bis 20 Gew.-% an Harnstoff- und/oder Melamin-Formaldehydharzen enthalten.

6. Beschichtungsmassen nach Ansprüchen 1 bis 5, dadurch gekennzeichnet, dass sie in Form von Lösungen vorliegen.

7. Verfahren zur Herstellung von hitzevernetzbaren Beschichtungsmassen, vorzugsweise in gelöster Form, aus einer Mischung von
A) im wesentlichen linearen Polyurethanpolymeren und

B) Harnstoff- und/oder Melamin-Formaldehydharzen,

dadurch gekennzeichnet, dass man die im wesentlichen linearen Polyurethanpolymeren auf der Basis von

a) höhermolekularen Diolen mit Molekulargewichten von 400 bis 6000,

b) Diisocyanaten und

c) Kettenverlängerungsmitteln unter Mitverwendung von

d) 0,,5 bis 10 Gew.-% von 2,2-Bis(hydroxymethyl)-propionsäureamid als alleiniges Kettenverlängerungsmittel oder in Abmischung mit weiteren, niedermolekularen Kettenverlängerungsmitteln c), vorzugsweise Diolen,

gegebenenfalls in Gegenwart von Lösungsmitteln, herstellt und mit den Harnstoff- und/oder Melamin-Formaldehydharzen B) und gegebenenfalls an sich üblichen Hilfs- und Zusatzstoffen vermischt.

8. Verwendung der hitzevernetzbaren Beschichtungsmassen nach Ansprüchen 1 bis 6, zur Beschichtung von textilen Flächengebilden, Leder oder Spaltleder nach dem Direkt- oder Umkehrbeschichtungsverfahren, vorzugsweise als Haftstrich bei den Umkehrbeschichtungsverfahren, durch Auftrag der Beschichtungsmassen oder bevorzugt ihrer Lösungen, in Mengen zwischen 10 und 300 g/m², vorzugsweise 20 und 100 g/m², und anschliessendes Erhitzen auf 110 bis 160°C, vorzugsweise 120 bis 140°C.

## Claims

1. Coating compositions which are cross-linkable under heat, preferably in dissolved form, consisting of a mixture of

A) substantially linear polyurethane polymers based on relatively high molecular weight diols with molecular weights of 400-6000, diisocyanates and chain-lenthening agents, and

B) melamine- and/or urea-formaldehyde resins, characterised in that the polyurethane polymer A) contains 2-2-bis(hydroxymethyl)-propionic acid amide, preferably in quantities of 0.5 to 10% by weight, incorporated therein as the chain-lengthener diol component.

2. Coating compositions according to Claim 1, characterised in that they contain 0.75 to 7.5% by weight of 2,2-bis(hydroxymethyl)-propionic acid amide incorporated therein.

3. Coating compositions according to Claims 1 and 2, characterised in that they contain low molecular weight diols with molecular weights of 62 to 399 incorporated therein as further chain-lenthening agents in addition to 2,2-bis(hydroxymethyl)-propionic acid amide.

4. Coating compositions according to Claims 1 to 3, characterised in that they contain customary auxiliaries and additives.

5. Coating compositions according to Claims 1 to 4, characterised in that the coating compositions contain 2 to 20% by weight of urea- and/or melamine-formaldehyde resins.

6. Coating compositions according to Claims 1 to 5, characterised in that they are present in the form of solutions.

7. Process for the production of coating compositions which are cross-linkable under heat, preferably in dissolved form, consisting of a mixture of

A) substantially linear polyurethane polymers and

B) urea- and/or melamine-formaldehyde resins, characterised in that the substantially linear polyurethane polymers are produced based on

a) relatively high molecular weight diols with molecular weights of 400 to 6000,

b) diisocyanates and

c) chain-lengthening agents with the simultaneous use of

d) 0.5 to 10% by weight of 2,2-bis(hydroxymethyl)-propionic acid amide as the sole chain-lengthening agent or in admixture with further, low molecular weight chain-lengthening agents c), preferably diols,

optionally in the presence of solvents and mixed with the urea- and/or melamine-formaldehyde resins B) and optionally auxiliaries and additives which are costomary per se.

8. Use of the coating compositions according to Claims 1 to 6 which are cross-linkable under heat for coating textile fabrics, leather or split leather by the direct or reversal coating process, preferably as an adhesive coating in the reversal coating processes, by applying the coating compositions or preferably solutions thereof, in quantities of between 10 and 300 g/m², preferably 20 and 100 g/m², and subsequently heating them to 110 to 160°C, preferably 120 to 140°C.

## Revendications

1. Masses de couchage réticulables à la chaleur, de préférence sous la forme dissoute, consistant en un mélange

A) d'un polymère de polyuréthane essentiellement linéaire à base de diols à poids moléculaire élevé ayant des poids moléculaires de 400 à 6000, de diisocyanates et d'agents d'allongement de chaîne, et

B) de résines de mélamine- et/ou urée-formaldéhyde,

caractérisées en ce que

le polymère de polyuréthane A) contient à l'état incorporé comme composant diol d'allongement de chaîne de la 2,2-bis(hydroxyméthyl)-propionamide, de préférence en des quantités de 0,5 à 10% en poids.

2. Masses de couchage selon la revendication 1, caractérisées en ce qu'elles contiennent à l'état incorporé 0,75 à 7,5% en poids de 2,2-bis(hydroxyméthyl)-propionamide.

3. Masses de couchage selon les revendications 1 et 2, caractérisées en ce qu'elles contiennent à l'état incorporé, à côté de la 2,2-bis(hydroxyméthyl)-propionamide, en tant qu'autres agents d'allongement de chaîne, des diols à poids moléculaire inférieur avec poids moléculaires de 62 à 399.

4. Masses de couchage selon les revendications 1 à 3, caractérisées en ce qu'elles contiennent les auxiliaires et additifs en usage.

5. Masses de couchage selon les revendications 1 à 4, caractérisées en ce que les masses de couchage contiennent 2 à 20% en poids de résines d'urée- et/ou mélamine-formaldéhyde.

6. Masses de couchage selon les revendications 1 à 5, caractérisées en ce qu'elles se présentent sous forme de solutions.

7. Procédé de fabrication de masses de couchage réticulables à la chaleur, de préférence sous la forme dissoute, à partir d'un mélange

A) de polymères de polyuréthane essentiellement linéaires et

B) de résines d'urée- et/ou mélamine-formaldéhyde,

caractérisées en ce qu'on prépare les polymères de polyuréthanes essentiellement linéaires à base

a) de diols à poids moléculaire élevé de 400 à 6000,

b) de diisocyanates et

c) d'agents d'allongement de chaîne avec utilisation conjointe

d) de 0,5 à 10% en poids de 2,2-bis(hydroxyméthyl)-propionamide comme unique agent d'allongement de chaîne ou en mélange avec d'autres agents d'allongement de chaîne à poids moléculaire inférieur c), de préférencedes diols,

éventuellement en présence de solvants, et en ce qu'on le mélange avec les résines d'urée- et/ou mélamine-formaldéhyde B) et éventuellement avec des auxiliaires et des additifs usuels en eux-mêmes.

8. Utilisation des masses de couchage réticulables à la chaleur selon les revendications 1 à 6, pour le couchage d'articles textiles à grande surface, du cuir ou du cuir refendu par le procédé de couchage direct ou à inversion, de préférence comme enduit adhésif dans les procédés de couchage à inversion, par application des masses de couchage ou de préférence de leurs solutions, en des quantités entre 10 et 300 g/m², de préférence de 20 à 100 g/m², avec chauffage consécutif à 110 à 160°C, de préférence à 120 à 140°C.